# EUROPEAN PATENT APPLICATION

(11) **EP 4 383 624 A1**
(43) Date of publication of application: **12.06.2024**
(21) Application number: 22852177.9
(22) Date of filing: 02.08.2022
(51) Int. Cl.: H04L 5/00, H04W 4/029

(54) **METHOD AND APPARATUS FOR ACTIVATING UL POSITIONING REFERENCE SIGNAL, AND TERMINAL AND NETWORK-SIDE DEVICE**

(30) Priority: 06.08.2021 CN 202110904304
(71) Applicant: Datang Mobile Communications Equipment Co., Ltd., Beijing 100085 (CN)
(72) Inventor: ZHANG, Bufang, Beijing 100085 (CN); FU, Jing, Beijing 100085 (CN); LI, Jianxiang, Beijing 100085 (CN); QUAN, Haiyang, Beijing 100085 (CN); LIANG, Jing, Beijing 100085 (CN)
(74) Representative: Studio Torta S.p.A.
(86) International application number: PCT/CN2022/109689
(87) International publication number: WO 2023/011465

(57) **Abstract**

A method and a device of activating an uplink positioning reference signal, a terminal and a network side device are provided. The method includes: sending a first request message to a network side when the terminal is in a RRC_idle state or a RRC_inactive state, wherein the first request message is configured to request to activate the uplink positioning reference signal.

## Description

### CROSS-REFERENCE TO RELATED APPLICATION

This application claims a priority to Chinese Patent Application No. 202110904304.0 filed on August 6, 2021, the disclosures of which are incorporated in their entirety by reference herein.

### TECHNICAL FIELD

The application relates to the technical field of communications, and in particular, to a method and a device for activating a UL positioning reference signal, a terminal, and a network-side device.

### BACKGROUND

In a 5th Generation Mobile Communication Technology New Radio (5G NR) positioning technology, positioning of a terminal in a connected state is mainly supported. In subsequent enhancement, positioning of a terminal in a non-connected state (including a Radio Resource Control (RRC) Idle state and a RRC_inactive state) is researched. A network side cannot determine when a user equipment (UE) needs to perform uplink (UL) positioning, and if the network side has activated a UL positioning reference signal, excess waste of power and resources may be incurred; if activation is performed by the UE itself, the network side cannot determine when the UE starts to transmit the UL positioning reference signal, which may cause the network side to continuously perform the monitoring, or even receiving nodes in a large range blindly listen to the UL positioning reference signal. Therefore, it is impossible to determine when to activate the UL positioning reference signal, resulting in higher terminal power consumption and higher network-side resource consumption.

### SUMMARY

An objective of the application is to provide a method and a device of activating a UL positioning reference signal, a terminal, and a network-side device, so as to solve the problems in the related art that when a network side cannot determine when a UE needs to perform UL positioning, and cannot determine when the UE starts to transmit a UL positioning reference signal, causing that the power consumption of the terminal is relatively high and the resource consumption of the network side is relatively high.

In order to solve the above technical problem, the application provides a method of activating a UL positioning reference signal, which is applied to a terminal, and includes: sending a first request message to a network side when the terminal is in a RRC_idle state or a RRC_inactive state, where the first request message is configured to request to activate the UL positioning reference signal.

Optionally, sending the first request message to the network side includes: sending the first request message to a location management function (LMF) entity, where the first request message is a Location and Positioning Protocol (LPP) activation request message; and/or sending the first request message to a base station, where the first request message is a preamble that is dedicated to activating the UL positioning reference signal, and/or an activation request signal.

Optionally, before sending the first request message to the network side, the method further includes: detecting, by the terminal, that a UL positioning trigger condition is satisfied.

Optionally, the first request message carries one or more of following: indication information of requesting to activate a UL positioning reference signal; an index of a UL positioning reference signal requested to be activated; information of a current serving cell; or beam information.

Optionally, after sending the first request message to the network side, the method further includes: receiving an activation command sent by the network side; transmitting the UL positioning reference signal.

Optionally, receiving the activation command sent by the network side includes: receiving the activation command sent by a base station; and/or receiving an LPP activation command sent by the LMF.

Optionally, the activation command sent by the base station includes at least one or more of following: a Radio Resource Control (RRC) message; a Random Access Response (RAR); Downlink Control Information (DCI); or Media Access Control (MAC)-Control Element (CE).

Optionally, the activation command carries one or more of following: an indication of confirming activation of the UL positioning reference signal; or, an index of the activated UL positioning reference signal.

Optionally, before sending the first request message to the network side, the method further includes: receiving an UL positioning trigger condition sent by an LMF; where, the UL positioning trigger condition includes one or more of following: a time instant at which positioning is triggered; a period that positioning is triggered; a quantity of times for which positioning is triggered; or an event that triggers positioning.

Optionally, before sending the first request message to the network side, the method further includes: receiving a Radio Resource Control (RRC) message sent by a base station, where the RRC message carries one or more of following: configuration information of the UL positioning reference signal that is pre-configured for the terminal; configuration information of the activation request signal that is pre-configured for the terminal and used for activating the UL positioning reference signal; or, a pre-configured preamble that is dedicated to activating the UL positioning reference signal.

An activation method of an Uplink (UL) positioning reference signal is provided performed by a base station. The method includes: receiving a first request message sent by a terminal in a RRC_idle state or a RRC_inactive state, where the first request message is configured to request to activate the UL positioning reference signal.

Optionally, the method further includes: sending an activation command to the terminal.

Optionally, the first request message is a preamble that is dedicated to activating the UL positioning reference signal, and/or an activation request signal.

Optionally, before sending the activation command to the terminal, the method further includes: sending a second request message to a location management function (LMF), where the second request message is configured to request the LMF to activate the UL positioning reference signal; where the second request message includes one or more of following: an index of a UL positioning reference signal that is requested to be activated; an indication of requesting activation of a UL positioning reference signal; or, configuration information of a pre-configured UL positioning reference signal.

Optionally, when the terminal is in the RRC_inactive state, after receiving the first request message sent by the terminal in the RRC_inactive state, the method further includes: in a case that the base station is an anchor base station, sending a third request message by the base station to a current serving base station, where the third request message is configured to request the current serving base station to activate the UL positioning reference signal; receiving a first response message fed back by the current serving base station according to the third request message; where the third request message includes one or more of following: an index of a UL positioning reference signal that is requested to be activated; an indication of requesting activation of a UL positioning reference signal; or, configuration information of a pre-configured UL positioning reference signal, where the first response message includes one or more of following: an indication of confirming activation of a UL positioning reference signal; or, an index of an activated UL positioning reference signal.

Optionally, before sending the activation command to the terminal, the method further includes: receiving an activation request message sent by the LMF, where the activation request message is configured to request a base station to activate the UL positioning reference signal, and/or perform anchor switching; feeding back an activation acknowledge message to the LMF according to the activation request message sent by the LMF, while or after sending the activation command to the terminal; where the activation acknowledge message includes one or more of following: an indication of confirming activation of the UL positioning reference signal; an index of the activated UL positioning reference signal; an indication that a base station performs anchor switching; or, information related to a current serving base station.

Optionally, in a case that the base station is the anchor base station and the activation request message sent by the LMF is configured to indicate the base station to perform the anchor switching, the method further includes: switching, by the base station, the anchor base station of the terminal to the current serving base station.

Optionally, the activation method further includes: sending a first indication message to the LMF while or after sending the activation command to the terminal, where the first indication message is configured to inform the LMF of the activated UL positioning reference signal; where the first indication message includes one or more of following: an indication of confirming activation of the UL positioning reference signal; or, an index of the activated UL positioning reference signal.

Optionally, before receiving the first request message sent by the terminal in the RRC_idle state or the RRC_inactive state, the method further includes: sending a Radio Resource Control (RRC) message to the terminal, where the RRC message carries one or more of following: configuration information of the UL positioning reference signal that is pre-configured for the terminal; configuration information of an activation request signal that is pre-configured for the terminal and used for activating the UL positioning reference signal; or, a pre-configured preamble that is dedicated to activating the UL positioning reference signal.

An activation method of an Uplink (UL) positioning reference signal is provided. The method is performed by a location management function (LMF) entity, the method includes: receiving a first request message sent by a terminal in a RRC_idle state or a RRC_inactive state, where the first request message is configured to request to activate the UL positioning reference signal.

Optionally, the first request message is a Location and Positioning Protocol (LPP) activation request message, and the LPP activation request message carries one or more of following: indication information of requesting to activate the UL positioning reference signal; an index of the UL positioning reference signal that is requested to be activated; information of a current serving cell; or beam information.

Optionally, after receiving the first request message sent by the terminal in the RRC_idle state or the RRC_inactive state, the method further includes: sending an LPP activation command to the terminal; where the LPP activation command carries one or more of following: an indication of confirming activation of the UL positioning reference signal; or, an index of the activated UL positioning reference signal.

Optionally, the method further includes: receiving a second request message sent by a base station, where the second request message is configured to request the LMF to activate the UL positioning reference signal; receiving a first indication message sent by the base station, where the first indication message is configured to inform the LMF of the activated UL positioning reference signal.

Optionally, the activation method further includes: sending an activation request message to a base station, where the activation request message is configured to request a base station to activate the UL positioning reference signal, and/or perform anchor switching; and/or, after sending the activation request message to the base station, receiving an activation acknowledge message sent by the base station, where the activation acknowledge message is feedback of the activation request message; where the activation request message carries one or more of following: an indication of confirming activation of the UL positioning reference signal; an index of the activated UL positioning reference signal; an indication that the base station performs anchor switching; or information related to the current serving base station.

Optionally, before receiving the first request message sent by the terminal in the RRC_idle state or the RRC_inactive state, the method further includes: sending a UL positioning trigger condition to the terminal, where the UL positioning trigger condition includes one or more of following: a time instant at which positioning is triggered; a period that positioning is triggered; a quantity of times for which positioning is performed; or an event that triggers positioning.

A terminal device is further provided in the application. The device includes: a transceiver, a memory, a processor, and a computer program stored on the memory and executable by the processor; where the transceiver is configured for: sending a first request message to a network side when the terminal is in a RRC_idle state or a RRC_inactive state, where the first request message is configured to request to activate the UL positioning reference signal.

Optionally, the transceiver is further configured for: sending the first request message to a location management function (LMF) entity, where the first request message is a Location and Positioning Protocol (LPP) activation request message; and/or sending the first request message to a base station, where the first request message is a preamble that is dedicated to activating the UL positioning reference signal, and/or an activation request signal.

Optionally, before sending the first request message to the network side, the processor is further configured for: detecting, by the terminal, that a UL positioning trigger condition is satisfied.

Optionally, the first request message carries one or more of following: indication information of requesting to activate the UL positioning reference signal; an index of the UL positioning reference signal requested to be activated; information of a current serving cell; or beam information.

Optionally, after sending the first request message to the network side, the transceiver is further configured for receiving an activation command sent by the network side, the processor is further configured for transmitting the UL positioning reference signal.

Optionally, the transceiver is further configured for: receiving the activation command sent by a base station; and/or receiving an LPP activation command sent by the LMF.

Optionally, the activation command sent by the base station includes at least one or more of following: a Radio Resource Control (RRC) message; a Random Access Response (RAR); Downlink Control Information (DCI); or Media Access Control (MAC)-Control Element (CE).

Optionally, the activation command carries one or more of following: an indication of confirming activation of the UL positioning reference signal; or, an index of the activated UL positioning reference signal.

Optionally, before sending the first request message to the network side, the transceiver is further configured for: receiving an UL positioning trigger condition sent by an LMF; where, the UL positioning trigger condition includes one or more of following: a time instant at which positioning is triggered; a period that positioning is triggered; a quantity of times for which positioning is triggered; or an event that triggers positioning.

Optionally, before sending the first request message to the network side, the transceiver is further configured for: receiving a Radio Resource Control (RRC) message sent by a base station, where the RRC message carries one or more of following: configuration information of the UL positioning reference signal that is pre-configured for the terminal; configuration information of an activation request signal that is pre-configured for the terminal and used for activating the UL positioning reference signal; or, a pre-configured preamble that is dedicated to activating the UL positioning reference signal.

A network-side device is further provided in the application. The network-side device includes: a transceiver, a memory, a processor, and a computer program stored on the memory and executable on the processor; where the transceiver is configured for: receiving a first request message sent by a terminal in a RRC_idle state or a RRC_inactive state, where the first request message is configured to request to activate the UL positioning reference signal.

Optionally, the transceiver is further configured for: sending an activation command to the terminal.

Optionally, the first request message is a preamble that is dedicated to activating the UL positioning reference signal, and/or an activation request signal.

Optionally, before sending the activation command to the terminal, the transceiver is further configured for: sending a second request message to a location management function (LMF), where the second request message is configured to request the LMF to activate the UL positioning reference signal; where the second request message includes one or more of following: an index of a UL positioning reference signal that is requested to be activated; an indication of requesting activation of a UL positioning reference signal; or, configuration information of a pre-configured UL positioning reference signal.

Optionally, when the terminal is in the RRC_inactive state, after receiving the first request message sent by the terminal in the RRC_inactive state, the transceiver is further configured for: in a case that the base station is an anchor base station, sending a third request message by the base station to a current serving base station, where the third request message is configured to request the current serving base station to activate the UL positioning reference signal; receiving a first response message fed back by the current serving base station according to the third request message; where the third request message includes one or more of following: an index of a UL positioning reference signal that is requested to be activated; an indication of requesting activation of a UL positioning reference signal; or, configuration information of a pre-configured UL positioning reference signal, where the first response message includes one or more of following: an indication of confirming activation of a UL positioning reference signal; or, an index of an activated UL positioning reference signal.

Optionally, before sending the activation command to the terminal, the transceiver is further configured for: receiving an activation request message sent by the LMF, where the activation request message is configured to request a base station to activate the UL positioning reference signal, and/or perform anchor switching; feeding back an activation acknowledge message to the LMF according to the activation request message sent by the LMF, while or after sending the activation command to the terminal; where the activation acknowledge message includes one or more of following: an indication of confirming activation of the UL positioning reference signal; an index of the activated UL positioning reference signal; an indication that a base station performs anchor switching; or, information related to a current serving base station.

Optionally, in a case that the base station is the anchor base station and the activation request message sent by the LMF is configured to indicate the base station to perform the anchor switching, the processor is configured for: switching, by the base station, the anchor base station of the terminal to the current serving base station.

Optionally, the transceiver is further configured for: sending a first indication message to the LMF while or after sending the activation command to the terminal, where the first indication message is configured to inform the LMF of the activated UL positioning reference signal; where the first indication message includes one or more of following: an indication of confirming activation of the UL positioning reference signal; or, an index of the activated UL positioning reference signal.

Optionally, before receiving the first request message sent by the terminal in the RRC_idle state or the RRC_inactive state, the transceiver is further configured for: sending a Radio Resource Control (RRC) message to the terminal, where the RRC message carries one or more of following: configuration information of the UL positioning reference signal that is pre-configured for the terminal; configuration information of an activation request signal that is pre-configured for the terminal and used for activating the UL positioning reference signal; or, a pre-configured preamble that is dedicated to activating the UL positioning reference signal.

A network-side device is further provided in the application. The device includes: a transceiver, a memory, a processor, and a computer program stored on the memory and executable on the processor; where the transceiver is configured for: receiving a first request message sent by a terminal in a RRC_idle state or a RRC_inactive state, where the first request message is configured to request to activate the UL positioning reference signal.

Optionally, the first request message is a Location and Positioning Protocol (LPP) activation request message, and the LPP activation request message carries one or more of following: indication information of requesting to activate the UL positioning reference signal; an index of the UL positioning reference signal that is requested to be activated; information of a current serving cell; or beam information.

Optionally, after receiving the first request message sent by the terminal in the RRC_idle state or the RRC_inactive state, the transceiver is further configured for: sending an LPP activation command to the terminal; where the LPP activation command carries one or more of following: an indication of confirming activation of the UL positioning reference signal; or, an index of the activated UL positioning reference signal.

Optionally, the transceiver is further configured for: receiving a second request message sent by a base station, where the second request message is configured to request the LMF to activate the UL positioning reference signal; receiving a first indication message sent by the base station, where the first indication message is configured to inform the LMF of the activated UL positioning reference signal.

Optionally, the transceiver is further configured for: sending an activation request message to a base station, where the activation request message is configured to request a base station to activate the UL positioning reference signal, and/or perform anchor switching; and/or, after sending the activation request message to the base station, receiving an activation acknowledge message sent by the base station, where the activation acknowledge message is feedback of the activation request message; where the activation request message carries one or more of following: an indication of confirming activation of the UL positioning reference signal; an index of the activated UL positioning reference signal; an indication that the base station performs anchor switching; or information related to the current serving base station.

Optionally, before receiving the first request message sent by the terminal in the RRC_idle state or the RRC_inactive state, the transceiver is further configured for: sending a UL positioning trigger condition to the terminal, where the UL positioning trigger condition includes one or more of following: a time instant at which positioning is triggered; a period that positioning is triggered; a quantity of times for which positioning is performed; or an event that triggers positioning.

An activation device of an Uplink (UL) positioning reference signal is provided. The device is applied to a terminal. The device includes: a first sending unit, configured for sending a first request message to a network side when the terminal is in a RRC_idle state or a RRC_inactive state, where the first request message is configured to request to activate the UL positioning reference signal.

An activation device of an Uplink (UL) positioning reference signal is provided. The device is applied to a base station. The device includes: a first receiving unit, configured for receiving a first request message sent by a terminal in a RRC_idle state or a RRC_inactive state, where the first request message is configured to request to activate the UL positioning reference signal.

An activation device of an Uplink (UL) positioning reference signal is provided. The device is applied to a Location Management Function (LMF) entity. The device includes: a second receiving unit, configured for receiving a first request message sent by a terminal in a RRC_idle state or a RRC_inactive state, where the first request message is configured to request to activate the UL positioning reference signal.

A processor-readable storage medium is provided. The computer-readable storage medium stores a program instruction, the program instruction is configured to cause a processor to execute steps of the activation methods of the UL positioning reference signal provided above.

The technical solutions of the application have at least the following beneficial effects.

In the application, for a scenario in which a network is a terminal pre-configured with a UL positioning reference signal, a first request message is sent to a network side when the terminal is in a RRC_idle state or a RRC_inactive state, and the solution sends a first request message to the network side when the terminal is in a RRC_idle state or a RRC_inactive state, so that the network side determines when to activate the UL positioning reference signal that is pre-configured for the UE, thereby avoiding the problems of high terminal power consumption and high network side resource consumption.

In the application, for a scenario in which the network pre-configures the UL positioning reference signal for the terminal, when the terminal is in the RRC_idle state or the RRC_inactive state, the first request message is sent to the network side, so that the network side can determine when to activate the UL positioning reference signal that is pre-configured for the UE. The problems of high power consumption of the terminal and high consumption of network-side resources can be avoided.

### BRIEF DESCRIPTION OF THE DRAWINGS

FIG. 1 shows an RRC state transition diagram in the related art;
FIG. 2 shows a positioning flowchart in the related art;
FIG. 3 is a first schematic flowchart of a method of activating a UL positioning reference signal according to some embodiments of the application;
FIG. 4 is a second schematic flowchart of a method of activating a UL positioning reference signal according to some embodiments of the application;
FIG. 5 is a third schematic flowchart of a method of activating a UL positioning reference signal according to some embodiments of the application;
FIG. 6 is a schematic structural diagram of a terminal device according to some embodiments of the application;
FIG. 7 is a first schematic structural diagram of a network-side device according to some embodiments of the application;
FIG. 8 is a second schematic structural diagram of a network-side device according to some embodiments of the application;
FIG. 9 is a first schematic structural diagram of a device of activating a UL positioning reference signal according to some embodiments of the application;
FIG. 10 is a second schematic structural diagram of a device of activating a UL positioning reference signal according to some embodiments of the application;
FIG. 11 is a third schematic structural diagram of a device of activating a UL positioning reference signal according to some embodiments of the application.

### DETAILED DESCRIPTION

In the embodiments of the application, the term "and/or" describes association relationship of associated objects, and indicates that there may be three kind of relationships, for example, A and/or B may indicate that A exists alone, A and B exist at the same time, and B exists alone. The character "/" generally indicates that the associated objects have "or" relationship.

In the embodiments of the application, the term "a plurality of" means two or more, and other quantifiers are similar to the term.

The technical solutions provided in the embodiments of the application may be applied to various systems, especially 5G systems. For example, the applicable systems may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a Worldwide Interoperability for Microwave Access (WiMAX) system, 5G New Radio Systems, etc. Each system includes a terminal device and a network device. The system may further includes a core network portion, such as an Evolved Packet System (EPS), a 5G system (5 GS), etc.

The terminal device according to the embodiments of the application may be a device that provides a user with voice and/or data connectivity, a handheld device having a wireless connection function, or other processing devices connected to a wireless modem, etc. In different systems, names of the terminal device may also be different, for example, in a 5G system, the terminal device may be referred to as a user equipment. The wireless terminal device may communicate with one or more core networks (CN) via a radio access network (RAN), which may be a mobile terminal device, such as a mobile phone (or referred to as a "cellular" phone) and a computer with a mobile terminal device, for example, may be a portable, a pocket-sized, a handheld, a computer-built-in or a vehicle-mounted mobile device which exchanges language and/or data with radio access networks. For example, devices such as a Personal Communication Service (PCS) phone, a cordless telephone, a Session Initiation Protocol (SIP) phone, a Wireless Local Loop (WLL) station, a Personal Digital Assistant (PDA), etc. The wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the application.

The network device involved in the embodiments of the application may be a base station, and the base station may include a plurality of cells that provide services for the terminal. According to different specific application occasions, a base station may also be referred to as an access point, or may be a device in an access network that communicates with a wireless terminal device through one or more sectors on an air interface, or the like. The network device may be configured to replace a received air frame with an Internet Protocol (IP) packet or replace the IP packet with a received air frame, to serve as a router between the wireless terminal device and the remaining portion of the access network, where the remaining portion of the access network may include an Internet Protocol (IP) communication network. The network device may also coordinate attribute management of the air interface. For example, the network device involved in the embodiments of the application may be a Base Transceiver Station (BTS) in a Global System for Mobile Communications (GSM) or Code Division Multiple Access (CDMA), or may be a NodeB in a Wide-Band Code Division Multiple Access (WCDMA). The network device in the application may also be an evolutional Node B or an eNB or a e-NodeB in a long term evolution (LTE) system, or a gNB in a Next Generation System, or a home evolved Node B (HeNB), a relay node, a Femto, a pico base station (pico), etc. which are not limited in the embodiments of the application. In some network structures, the network device may include a centralized unit (CU) node and a distributed unit (DU) node, and the centralized unit and the distribution unit may also be geographically separated.

Multi-input multi-output (MIMO) transmission may be performed between the network device and the terminal device by using one or more antennas, and the MIMO transmission may be Single User MIMO (SU-MIMO) or Multiple User MIMO (MU-MIMO). According to the form and the quantity of the root antenna combinations, MIMO transmission may be 2D-MIMO, 3D-MIMO, FD-MIMO, or massive-MIMO, or may be diversity transmission or precoding transmission or beamforming transmission, etc.

The following first describes the content involved in the solution provided by the application.

### 1. NR RRC State

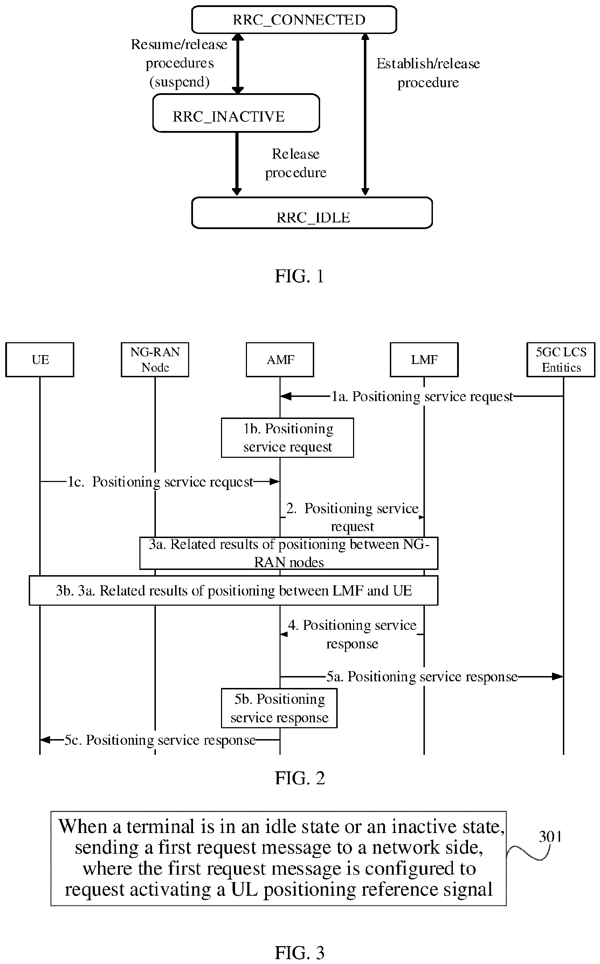

The NR system is designed with three RRC states: an idle (RRC_IDLE) state, a connected (RRC_CONNECTED) state, and an inactive (RRC_INACTIVE) state. When an RRC connection exists between the terminal and the network, the terminal is in the connected state or the RRC_inactive state, otherwise, the terminal is in the RRC_idle state. The RRC state transition is shown in FIG. 1. At one moment, the terminal may only be in one RRC state.
(1) The idle (IDLE) state has the following characteristics:
   the terminal may receive basic system information, and according to system configuration, the terminal may also send a System Information (SI) request in the RRC_idle state to obtain more system messages;
   in this state, the terminal obtains a paging message sent by the core network by monitoring a 5G-S-TMSI;
   a mobility management mechanism controlled by the terminal itself is used, that is, the terminal autonomously decides to perform cell selection or reselection on the basis of measurement.
   At this time, the terminal transitions into an RRC connected state by means of an RRC connection process.
(2) The RRC_inactive state has the following characteristics:
   Based on the configuration from the network, the mobility controlled by the terminal is executed, that is, the terminal may autonomously move in the area configured by the network without notifying the network;
   the terminal stores the context of the AS;
   the terminal further receives a paging message initiated by the core network by monitoring the paging channel and using a 5G system identifier (5G-S-TMSI), and obtains a paging message initiated by the RAN by using an inactive radio network temporary identifier (Inactive RNTI, I-RNTI);
   performing a periodic update based on a RAN-based Notification Area (RNA), and performing updating when the terminal moves out of the RNA.

### 2. Small Data Transmission (SDT)

How small data is sent in a RRC_inactive state in NR is being discussed, in which a RRC Signaling is used to transmit small data, and small data is transmitted without using RRC Signaling (i.e. w/o RRC Signaling). In case that the RRC Signaling is used to transmit small data, that is, a RRC Resume Request message is sent to the network side together with the small data packets to be transmitted, and a subsequent process is triggered.

In the current discussion, it is considered that a RRC Signaling is used to transmit non-connected-state small data, and a current serving base station (serving gNB) may be different from an anchor base station (anchor gNB). In the case of a small amount of SDT, there may be no necessity for anchor switching. Therefore, in the non-connected-state small data transmission process, anchor switching is not performed, which is one target of the R17 SDT design.

Non-connected state small data transmission without performing anchor switching can only be related operations of a Packet Data Convergence Protocol (PDCP) layer performed by an anchor gNB, including encryption/decryption, integrity protection/verification, etc.

3. A positioning process is as shown in FIG. 2, and is summarized as follows:
a current serving AMF (access and mobility management function) receives a positioning service request based on an external positioning service entity, or internal positioning requirement (for example, for an emergency call positioning UE) of an AMF, or a trigger from the UE;
the AMF sends the positioning service request to a Location Management Function (LMF);
the LMF may trigger a process related to positioning between the LMF and a new generation (NG)-RAN node, such as obtaining auxiliary information required for positioning or a positioning measurement result; the LMF communicates with the NG-RAN node by using an NR positioning protocol A;
the LMF may also trigger a process related to positioning between the UE and the LMF, such as transmitting positioning auxiliary information to the UE to obtain a positioning measurement result or a positioning estimation result reported by the UE; the LMF and the UE use a positioning protocol (LTE Positioning Protocol, LPP) for communication;
the LMF sends a positioning service response to the AMF;
the AMF sends the positioning service response to the corresponding positioning service trigger entity.

For UL positioning of the terminal in the IDLE state or the inactivate INACTIVE state, the network may pre-configure a corresponding UL positioning reference signal for the terminal, and the terminal performs transmission of the uplink reference signal based on the pre-configured UL positioning reference signal after the UE enters the IDLE state or the INACTIVE state, thereby reducing power consumption of the UE. However, when the network pre-configures the UL positioning reference signal for the UE in the IDLE state or the INACTIVE state, the network cannot determine when to activate the UL positioning reference signal. Based on the above, the application provides a method and a device of activating a UL positioning reference signal, a terminal, and a network-side device, for solving the problem in the related art that when a network pre-configures the UL positioning reference signal for the UE in the IDLE state or the RRC_inactive state, the network cannot determine when to activate the UL positioning reference signal.

The method and the device are based on the same application concept, and implementation of the device and the method may be described by referring to each other due to similar principles of the method and the device solving the problem, and duplicate details are not described herein again.

As shown in FIG. 3, the application provides a method of activating a Uplink (UL) positioning reference signal, the method is applied to a terminal, the method includes:
Step 301: when the terminal is in a RRC_idle state or a RRC_inactive state, sending a first request message to a network side, where the first request message is configured to request activating the UL positioning reference signal.

In the application, for a scenario in which the network pre-configures the UL positioning reference signal for the terminal, when the terminal is in the RRC_idle state or the RRC_inactive state, the first request message is sent to the network side, so that the network side can determine when to activate the UL positioning reference signal that is pre-configured for the UE. Moreover, the UL positioning reference signal is activated based on the request of the UE, so that the problems of high power consumption of the terminal and high consumption of network-side resources can be avoided. Moreover, the UE sends a more appropriate UL positioning reference signal, which also improves the efficiency in the UL positioning process.

Optionally, sending the first request message to the network side includes:
sending the first request message to a location management function (LMF) entity, where the first request message is an LPP activation request message; and/or
sending the first request message to a base station, where the first request message is a preamble that is dedicated to activating the UL positioning reference signal, and/or an activation request signal.

In the application, the UL positioning reference signal may be requested to be activated by the terminal, through sending, to the location management function (LMF) entity and/or to the base station, the first request message for requesting to activate the UL positioning reference signal, and various approaches are provided for the activation of the UL positioning reference signal.

Optionally, before sending the first request message to the network side, the method further includes: detecting, by the terminal, that a UL positioning trigger condition is satisfied.

In the application, by setting the UL positioning trigger condition, only the terminal meeting the UL positioning trigger condition may send, to the location management function (LMF) entity and/or the base station, the first request message for requesting to activate the UL positioning reference signal, thereby avoiding unnecessary transmission of request information and saving resources.

Optionally, the first request message carries one or more of the following:
indication information of requesting to activate the UL positioning reference signal;
an index of the UL positioning reference signal that is requested to be activated;
information of a current serving cell; or
beam information.

It should be noted that the information of the current serving cell and/or the beam information carried in the first request message is only associated with sending the first request message to the location management function (LMF) entity by the terminal.

In the application, the indication information of requesting to activate the UL positioning reference signal and the index of the UL positioning reference signal and the information of the current serving cell, and/or the beam information can be determined by the information carried in the first request message.

Optionally, after sending the first request message to the network side, the method further includes:
receiving an activation command sent by the network side;
transmitting the UL positioning reference signal.

In the application, after receiving the activation command sent by the network side, the transmission of the UL positioning reference signal can be performed, which can ensure that the UE side sends a more appropriate UL positioning reference signal, and also improves the efficiency and security in the UL positioning process.

Optionally, receiving the activation command sent by the network side includes:
receiving the activation command sent by a base station; and/or
receiving an LPP activation command sent by the LMF.

After receiving the activation command sent by the base station and/or the LPP activation command sent by the LMF, the UL positioning reference signal is transmitted.

Optionally, the activation command sent by the base station may be one or more of following:
a radio resource control (RRC) message;
a random access response (RAR);
downlink control information (DCI); or
Media Access Control (MAC)-Control Element (CE).

It should be noted that the random access RAR response in the activation command sent by the base station is only used for the case where the first request message including the preamble that is dedicated to activating the UL positioning reference signal is sent to the base station.

Optionally, the activation command carries one or more of the following:
an indication of confirming activation of the UL positioning reference signal; or
an index of the activated UL positioning reference signal.

Optionally, before sending the first request message to the network side, the method further includes: receiving the UL positioning trigger condition sent by an LMF; where, the UL positioning trigger condition includes one or more of the following:
a time instant of triggering the positioning;
a period of triggering the positioning;
the number of times of performing the positioning; or
an event triggering the positioning.

In the application, the time instant of triggering the positioning may be relative time or an absolute time; and the event of triggering the positioning includes changing a cell or leaving a predetermined region.

In the application, by setting the UL positioning trigger condition, only the terminal meeting the UL positioning trigger condition may send, to the location management function (LMF) entity and/or the base station, the first request message for requesting to activate the UL positioning reference signal, thereby avoiding unnecessary transmission of request information and saving resources.

Optionally, before sending the first request message to the network side, the method further includes: receiving an RRC message sent by a base station, where the RRC message carries one or more of the following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

In the application, the RRC message including the configuration information of the UL positioning reference signal that is pre-configured for the terminal and/or the configuration information of the activation request signal that is pre-configured for the terminal and used for activating the UL positioning reference signal, and/or, the pre-configured preamble that is dedicated to activating the UL positioning reference signal, is received, so that the terminal can determine the configuration information of the UL positioning reference signal, and send the first request message for requesting to activate the UL positioning reference signal to the network side according to the configuration information of the UL positioning reference signal.

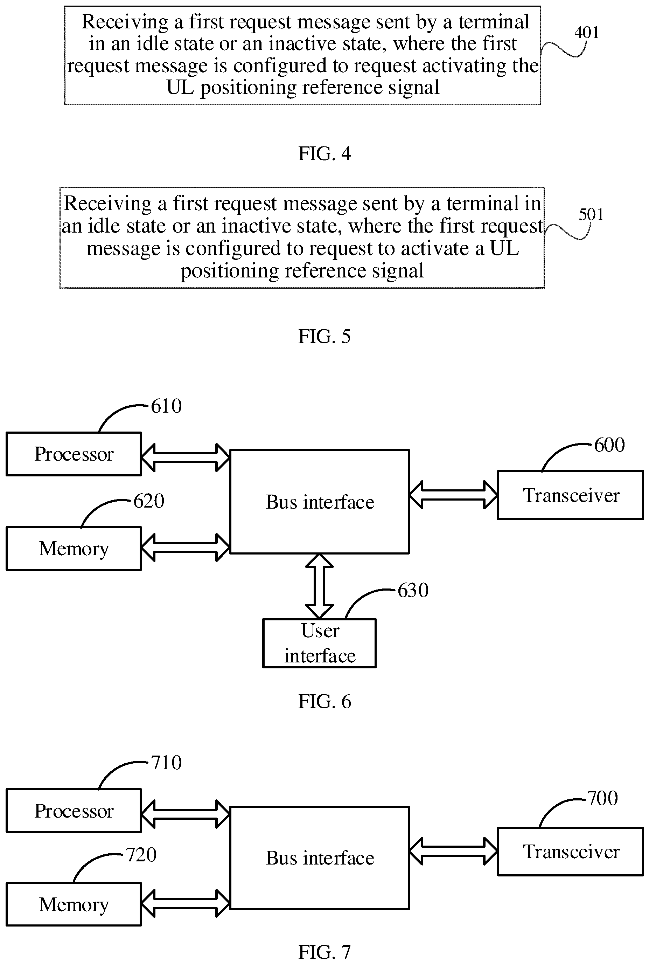

As shown in FIG. 4, the application provides a method of activating a UL positioning reference signal, the method is applied to a base station, the method includes:
Step 401: receiving a first request message sent by a terminal in a RRC_idle state or a RRC_inactive state, where the first request message is configured to request activating the UL positioning reference signal.

In the application, for a scenario in which the network pre-configures the UL positioning reference signal for the terminal, sending the first request message to the terminal in the RRC_idle state or the RRC_inactive state enables the network side to determine when to start reception and measurement of the UL positioning reference signal according to the first request message, after the network side pre-configures the UL positioning reference signal for the UE in the RRC_idle state or the RRC_inactive state.

Optionally, the method further includes sending an activation command to the terminal.

The base station generates the activation command according to the received first request message, and sends the activation command to the terminal, so that the terminal determines when and how to activate the UL positioning reference signal. It should be noted that the activation command may be sent to the terminal through a current serving base station or the anchor base station.

Optionally, the first request message is a preamble that is dedicated to activating the UL positioning reference signal, and/or an activation request signal.

Optionally, the activation command is one or more of the following:
a Radio Resource Control (RRC) message;
a Random Access Response (RAR) response;
Downlink Control Information (DCI);
Media Access Control (MAC) Control Element (CE) ;
indication of confirming activation of the UL positioning reference signal; or
an index of the activated UL positioning reference signal.

Optionally, the activation command is one or more of the following: an RRC message, an RAR response, a DCI, and a MAC CE; and the activation command carries one or more of the following information: an indication of confirming the activation of the UL positioning reference signal; or an index of the activated UL positioning reference signal.

It should be noted that the random access response RAR in the activation command is only applied to the embodiment of receiving, by the base station, the first request message including the preamble that is dedicated to activating the UL positioning reference signal.

Optionally, the first request message carries one or more of the following:
indication information of requesting to activate the UL positioning reference signal; or
an index of the UL positioning reference signal that is requested to be activated.

In the application, the first request message that carries the indication information of requesting to activate the UL positioning reference signal or the index of the UL positioning reference signal that is requested to be activated, enables the base station to determine the content of the activation command that needs to be generated.

Optionally, before sending the activation command to the terminal, the method further includes:
sending a second request message to the LMF, where the second request message is configured to request the LMF to activate the UL positioning reference signal; the second request message includes one or more of the following:
an index of a UL positioning reference signal that is requested to be activated;
an indication of requesting activation of a UL positioning reference signal; or
configuration information of a pre-configured UL positioning reference signal.

It should be noted that, after receiving the first request message of the terminal, the base station may directly send the activation command to the terminal; or the base station may, after receiving the first request message from the terminal, send the second request message to the LMF, then receive an activation request message sent by the LMF, and send the activation command to the terminal according to the activation request message sent by the LMF.

The application ensures the reliability of the activation of the UL positioning reference signal performed by the terminal.

Optionally, when the terminal is in the RRC_inactive state, after receiving the first request message sent by the terminal in the RRC_inactive state, the method further includes:
in a case that the base station is an anchor base station, sending a third request message by the base station to a current serving base station, where the third request message is configured to request the current serving base station to activate the UL positioning reference signal;
receiving a first response message fed back by the current serving base station according to the third request message; where the third request message includes one or more of the following:
   an index of a UL positioning reference signal that is requested to be activated;
   an indication of requesting activation of a UL positioning reference signal; or
   configuration information of a pre-configured UL positioning reference signal.

The first response message includes one or more of the following:
an indication of confirming activation of a UL positioning reference signal; or
an index of an activated UL positioning reference signal.

In the application, when the base station is the anchor base station, the anchor base station sends, to the current serving base station, the third request message for requesting the current serving base station to activate the UL positioning reference signal, and then sends an activation command to the terminal according to a first response message fed back by the current serving base station.

Optionally, before sending the activation command to the terminal, the method further includes:
receiving an activation request message sent by the LMF, where the activation request message is configured to request a base station to activate a UL positioning reference signal, and/or perform anchor switching;
feeding back an activation acknowledge message to the LMF according to the activation request message sent by the LMF, while or after sending the activation command to the terminal;
where the activation acknowledge message includes one or more of the following:
   an indication of confirming activation of a UL positioning reference signal;
   an index of an activated UL positioning reference signal;
   an indication that a base station performs anchor switching; or
   information related to a current serving base station.

The application requests the base station to activate the UL positioning reference signal by means of the activation request message, or performs anchor switching by means of the activation message, switches the anchor base station to the current serving base station, and then activates the UL positioning reference signal by means of the current serving base station.

Optionally, the activation request message carries one or more of the following:
an indication of confirming activation of a UL positioning reference signal;
an index of an activated UL positioning reference signal;
an indication that a base station performs anchor switching; or
information related to a current serving base station.

In the application, the anchor base station can be switched to the current serving base station according to the activation request message carrying the indication that the base station performs the anchor switching and/or the information related to the current serving base station.

Optionally, in a case that the base station is the anchor base station and the activation request message sent by the LMF is configured to indicate the base station to perform the anchor switching, the method further includes:
switching, by the base station, the anchor base station of the terminal to the current serving base station.

In the application, the anchor base station can be switched to the current serving base station according to the activation request message carrying the indication that the base station performs the anchor switching and/or the information related to the current serving base station.

Optionally, while or after sending the activation command to the terminal, the method may further include:
sending a first indication message to the LMF, where the first indication message is configured to inform the LMF of the activated UL positioning reference signal; where the first indication message includes one or more of the following:
an indication of confirming activation of the UL positioning reference signal; or
an index of the activated UL positioning reference signal.

Optionally, before receiving the first request message sent by the terminal in the IDLE state or the INACTIVE state, the method further includes:
sending an RRC message to the terminal, where the RRC message carries one or more of the following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

In the application, the RRC message is sent to the terminal, so that the terminal can determine the configuration information of the UL positioning reference signal, and send, according to the configuration information of the UL positioning reference signal, the first request message for requesting to activate the UL positioning reference signal to the network side.

As shown in FIG. 5, the application provides a method of activating a UL positioning reference signal, the method is applied to a location management function (LMF) entity and includes:
Step 501: receiving a first request message sent by a terminal in a RRC_idle state or a RRC_inactive state, where the first request message is configured to request to activate a UL positioning reference signal.

In this embodiment of the application, for a scenario in which the network pre-configures the UL positioning reference signal for the terminal, receiving the first request message sent by the terminal in the RRC_idle state or the RRC_inactive state enables the network to determine when to start reception and measurement of the UL positioning reference signal according to the first request message, after the network pre-configures the UL positioning reference signal for the UE in the idle(IDLE) state or the RRC_inactive state.

Optionally, the first request message is an LPP activation request message, and the LPP activation request message carries one or more of the following:
indication information of requesting to activate the UL positioning reference signal;
an index of the UL positioning reference signal that is requested to be activated;
information of a current serving cell; or
beam information.

In this embodiment of the application, the indication information of requesting to activate the UL positioning reference signal, the index of the UL positioning reference signal that is requested to be activated, the information of the current serving cell, and/or the beam information can be determined by means of a LPP activation request message.

Optionally, after receiving the first request message sent by the terminal in the IDLE state or the INACTIVE state, the method further includes:
sending an LPP activation command to the terminal; where the LPP activation command carries one or more of the following:
an indication of confirming activation of the UL positioning reference signal; or
an index of the activated UL positioning reference signal.

In this embodiment of the application, the LPP activation command is sent to the terminal, so that the terminal can determine when and how to activate the UL positioning reference signal.

Optionally, the activation method further includes:
receiving a second request message sent by a base station, where the second request message is configured to request the LMF to activate a UL positioning reference signal;
receiving a first indication message sent by a base station, where the first indication message is configured to inform the LMF of the activated UL positioning reference signal.

In the application, by receiving the second request message sent by the base station, it is determined that the activation of the UL positioning reference signal needs to be performed, and the UL positioning reference signal to be activated is determined by receiving the first indication message sent by the base station. According to the solution of the application, the LMF can enable the terminal to determine when and how to activate the UL positioning reference signal, which can avoid the problems of high power consumption of the terminal and high network side resource consumption.

Optionally, the activation method further includes:
sending an activation request message to a base station, where the activation request message is configured to request a base station to activate a UL positioning reference signal, and/or perform anchor switching; and/or,
after sending the activation request message to the base station, receiving an activation acknowledge message sent by the base station, where the activation acknowledge message is feedback of the activation request message;
the activation request message carries one or more of the following:
   an indication of confirming activation of the UL positioning reference signal;
   an index of the activated UL positioning reference signal;
   an indication that the base station performs anchor switching; or
   information related to the current serving base station.

In the application, the anchor base station can be switched to the current serving base station according to the activation request message carrying the indication that the base station performs anchor switching and/or the information related to the current serving base station.

Optionally, the second request message includes one or more of the following:
indication information for requesting to activate a UL positioning reference signal; or
an index of a UL positioning reference signal requested to be activated.

Optionally, the first indication message and the activation acknowledge message include one or more of the following:
an indication of confirming activation of the UL positioning reference signal; or
an index of the activated UL positioning reference signal.

Optionally, before the receiving the first request message sent by the terminal in the IDLE state or the INACTIVE state, the method further includes:
sending a UL positioning trigger condition to the terminal, where the UL positioning trigger condition includes one or more of the following:
a time instant of triggering positioning;
a period of triggering positioning;
the number of times of performing positioning; or
an event that triggers positioning.

In the application, the time instant of triggering the positioning may be relative time or absolute time; and the event that triggers the positioning includes changing a cell or leaving a predetermined region.

In the application, by setting the UL positioning trigger condition, only the terminal meeting the UL positioning trigger condition may send, to the location management function LMF and/or the base station, the first request message for requesting to activate the UL positioning reference signal, thereby avoiding unnecessary transmission of request information and saving resources.

### First embodiment of the application

The terminal in the IDLE state or the INACTIVE state sends a preamble that is dedicated to activating the UL positioning reference signal and/or the activation request signal to the base station, to request to activate the pre-configured UL positioning reference signal.

Step 1a: the LMF sends the UL positioning trigger condition to the terminal through an LPP message, where the UL positioning trigger condition includes one or more of the following:
a time instant of triggering positioning, which may be relative time, or may be absolute time;
a period of triggering the positioning;
the number of times of performing the positioning; or
an event of triggering the positioning, such as changing a cell or leaving a predetermined area.

Step 1b: the current serving base station sends an RRC message to the terminal, where the RRC message carries one or more of following: configuration information of a UL positioning reference signal that is pre-configured for the terminal, and/or preamble configuration information dedicated to activating the UL positioning reference signal, and/or a preconfigured activation request signal.

The terminal enters an IDLE state or an INACTIVE state according to a subsequent related process.

Step 2: the terminal in the IDLE state or the INACTIVE state detects that the UL positioning trigger condition is satisfied, and sends a preamble that is dedicated to activating the UL positioning reference signal and/or a pre-configured activation request signal to request to activate the UL positioning reference signal.

The preamble includes one or more of the following:
indication information of requesting to activate an uplink SRS; or
an index of a UL SRS requested to be activated;

Step 3a: the base station directly sends an activation command of a UL positioning reference signal to the terminal, where the activation command may be at least one of: an RRC message, and/or Downlink Control Information (DCI), and/or a Medium Access Control (MAC) Control Element (CE), and/or an RAR response;
where the activation command carries one or more of the following:
an indication of acknowledging activation of the requested UL positioning reference signal; or
an index of an activated UL positioning reference signal;
meanwhile, the terminal interacts with the LMF, and the terminal sends the activated UL positioning reference signal to the LMF.

Step 3b: the base station sends an NRPPa message to the LMF, to inform the LMF that transmission of the UL positioning reference signal needs to be activated, and the NRPPa message carries configuration information of the UL reference signal to be activated; after receiving the NRPPa message, the LMF issues an NRPPa positioning reference signal activation request message, and after receiving the activation request message, the base station sends a UL positioning reference signal activation command to the terminal, where the activation command may be at least one of an RRC message, and/or DCI, and/or a MAC CE, and/or an RAR response.

The activation command carries one or more of the following:
an indication of acknowledging activation of a UL positioning reference signal; or
an index of an activated UL positioning reference signal;

At the same time, the base station feeds back an activation response message to the LMF.

Step 4: the LMF requests, through the NRPPA message, the base station to receive the UL positioning reference information, and feed back the UL positioning measurement result; optionally, the information of the current serving cell and/or the beam information in the activation request message, and determines a base station list for executing UL positioning measurement; correspondingly, the terminal sends the UL positioning reference signal according to received configuration.

### Second embodiment of the application

The terminal in the IDLE state or the INACTIVE state sends a request to the LMF, to request to activate the UL positioning reference signal.

Step 1a: the LMF notifies the terminal of the UL positioning trigger condition through an LPP message, where the UL positioning trigger condition includes one or more of the following:
a time instant of triggering the positioning, which may be relative time, or may be absolute time;
a period of triggering the positioning;
the number of times of performing the positioning; or
an event that triggers the positioning, such as changing a cell or leaving a predetermined area.

The terminal enters an IDLE state or an INACTIVE state according to a subsequent related process.

Step 1b: the current serving terminal sends an RRC message to the UE, where the RRC message carries configuration information of a UL positioning reference signal preconfigured for the UE.

The terminal enters an IDLE state or an INACTIVE state according to a subsequent related process.

Step 2: after the terminal in the IDLE state or the INACTIVE state detects that the UL positioning trigger condition is satisfied, the terminal sends an LPP message to the network side to request to activate the UL positioning reference signal, and the LPP message may include one or more of the following:
indication information of requesting to activate an uplink SRS;
an index of a UL SRS requested to be activated; or
information of the current serving cell;
meanwhile, under the condition that the SDT condition is met, the terminal in the IDLE state or the INACTIVE state may use the SDT process to send the LPP message to the network.

Step 3a: the LMF notifies the base station, to trigger the current serving base station to activate the UL positioning reference signal configuration, this step includes one or more of the following:
i) the LMF sends an NRPPa activation request message to notify the current serving base station to activate the UL positioning reference signal, where the activation request message carries configuration information of the UL positioning reference signal to be activated; after receiving the activation request message and the corresponding UL reference signal configuration, the current serving base station issues an activation command to the UE, where the activation command may be at least one of MAC CE, DCI, and RRC;
ii) when the terminal is in the RRC_inactive state, the LMF sends an NRPPa positioning activation request message to the anchor base station; and the anchor base station sends an activation request message to the current serving base station, where the activation request message carries UL positioning reference signal configuration information; after receiving the activation request message and the corresponding UL reference signal configuration, the current serving base station issues an activation command to the terminal, where the activation command may be at least one of MAC CE, DCI, and RRC; meanwhile, the current serving base station feeds back an activation response message to the anchor base station, and then the anchor base station feeds back an NRPP activation request response message to the LMF;
iii) when the terminal is in the RRC_inactive state, the LMF sends an NRPPa positioning activation request message to the anchor base station; the anchor base station triggers an anchor relocation process, and switches the anchor base station of the terminal to the current serving base station; the current serving base station activates the command to the terminal, and the activation command may be at least one of MAC CE, DCI, and RRC; correspondingly, the current serving base station sends an NRPPa positioning activation request response message to the LMF.

The activation command carries one or more of the following:
an indication of acknowledging activation of the requested UL positioning reference signal; or
an index of the activated UL positioning reference signal.

Step 3b: the LMF issues an LPP positioning reference signal activation message to the terminal, where the activation message carries one or more of the following:
an indication of acknowledging activation of the requested UL positioning reference signal; or
an index of the activated UL positioning reference signal;

Step 4: the LMF requests, through the NRPPa message, the base station to receive the UL positioning reference information, and feed back the UL positioning measurement result; optionally, according to the information of the current serving cell and/or the beam information in the activation request message, the LMF determines a base station list for executing ULpositioning measurement.

Correspondingly, the UE sends the UL positioning reference signal according to the received configuration, and optionally, the terminal sends, according to the received configuration, the UL positioning reference signal when the terminal is in the IDLE state or the RRC_inactive state.

As shown in FIG. 6, the application provides a terminal device. The terminal device includes: a transceiver 600, a memory 620, a processor 610, and a computer program stored on the memory and executable on the processor; and the transceiver is configured to send a first request message to a network side when the terminal is in a RRC_idle state or a RRC_inactive state, where the first request message is configured to request to activate the UL positioning reference signal.

In FIG. 6, a bus architecture may include any number of interconnected buses and bridges. Specifically, various circuits such as one or more processors represented by the processor 610 and a memory represented by the memory 620 are linked together. The bus architecture may also link together various other circuits, such as peripheral devices, voltage regulators, and power management circuits, etc. which are well known in the art, and therefore are not further described herein. The bus interface provides an interface. The transceiver 600 may be a plurality of elements, i.e. include a transmitter and a receiver, and provide units for communicating with various other devices on a transmission medium. The transmission medium includes a wireless channel, a wired channel, and an optical cable. For different user equipment, the user interface 630 may also be an interface that can be externally or internally connected to a required device, and the connected device includes, but is not limited to, a keypad, a display, a speaker, a microphone, a joystick, etc.

The processor 610 is responsible for managing the bus architecture and general processing, and the memory 620 may store data used by the processor 610 when performing operations.

Optionally, the processor 610 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor is configured to, by invoking the computer program stored in the memory, perform the methods provided by the application according to the obtained executable instruction. The processor and the memory may also be physically separately arranged.

Optionally, the transceiver 600 is further configured for:
sending the first request message to a location management function (LMF) entity, where the first request message is an LPP activation request message; and/or
sending the first request message to a base station, where the first request message is a preamble that is dedicated to activating the UL positioning reference signal, and/or an activation request signal.

Optionally, before sending the first request message to the network side, the processor 610 is further configured for:
detecting, by the terminal, that a UL positioning trigger condition is satisfied.

Optionally, the first request message carries one or more of the following:
indication information of requesting to activate the UL positioning reference signal;
an index of the UL positioning reference signal that is requested to be activated;
information of a current serving cell; or
beam information.

Optionally, after sending the first request message to the network side, the transceiver 600 is further configured for:
receiving an activation command sent by the network side;
transmitting the UL positioning reference signal.

Optionally, the transceiver is further configured for:
receiving the activation command sent by a base station; and/or
receiving an LPP activation command sent by the LMF.

Optionally, the activation command sent by the base station may be one or more of the following:
a radio resource control (RRC) message;
a random access response (RAR);
downlink control information (DCI); or
Media Access Control (MAC)-Control Element (CE).

Optionally, the activation command carries one or more of the following:
an indication of confirming activation of the UL positioning reference signal;
an index of the activated UL positioning reference signal.

Optionally, before sending the first request message to the network side, the transceiver 600 is further configured for:
receiving the UL positioning trigger condition sent by an LMF; where, the UL positioning trigger condition includes one or more of the following:
a time instant of triggering the positioning;
a period of triggering the positioning;
the number of times of performing the positioning; or
an event triggering the positioning.

Optionally, before sending the first request message to the network side, the transceiver 600 is further configured for: receiving an RRC message sent by a base station, where the RRC message carries one or more of the following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

It should be noted that, the terminal device provided in the application can implement all method steps implemented by the embodiment of the method of activating the UL positioning reference signal performed by the terminal, and can achieve the same technical effect, and the same parts between the method embodiments and the terminal device embodiment and beneficial effects in the application will not be described in detail herein.

As shown in FIG. 7, the application further provides a network-side device. The network-side device includes: a transceiver 700, a memory 720, a processor 710, and a computer program stored on the memory 720 and executable on the processor 710; where the transceiver 700 is configured to receive a first request message sent by a terminal in an IDLE state or an INACTIVE state, where the first request message is configured to request to activate the UL positioning reference signal. It should be noted that the network-side device herein may be a base station.

In FIG. 7, a bus architecture may include any number of interconnected buses and bridges. Specifically, various circuits such as one or more processors represented by the processor 710 and a memory represented by the memory 720 are linked together. The bus architecture may also link together various other circuits, such as peripheral devices, voltage regulators, and power management circuits, etc. which are well known in the art, and therefore are not further described herein. The bus interface provides an interface. The transceiver 700 may be a plurality of elements, i.e. include a transmitter and a receiver, and provide units for communicating with various other devices on a transmission medium. The transmission medium includes a wireless channel, a wired channel, and an optical cable. The processor 710 is responsible for managing the bus architecture and general processing, and the memory 720 may store data used by the processor 710 when performing operations.

The processor 710 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

Optionally, the transceiver 700 is further configured for: sending an activation command to the terminal.

Optionally, the first request message is a preamble that is dedicated to activating the UL positioning reference signal, and/or an activation request signal.

Optionally, the activation command is one or more of the following:
a Radio Resource Control (RRC) message;
a Random Access Response (RAR) response;
Downlink Control Information (DCI);
Media Access Control (MAC) Control Element (CE) ;
indication of confirming activation of the UL positioning reference signal; or
an index of the activated UL positioning reference signal.

Optionally, the first request message carries one or more of the following:
indication information of requesting to activate the UL positioning reference signal; or
an index of the UL positioning reference signal that is requested to be activated.

Optionally, before sending the activation command to the terminal, the transceiver 700 is further configured for:
sending a second request message to the LMF, where the second request message is configured to request the LMF to activate the UL positioning reference signal; where the second request message includes one or more of the following:
an index of a UL positioning reference signal that is requested to be activated;
an indication of requesting activation of a UL positioning reference signal; or
configuration information of a pre-configured UL positioning reference signal.

Optionally, when the terminal is in the RRC_inactive state, after receiving the first request message sent by the terminal in the RRC_inactive state, the transceiver 700 is further configured for:
in a case that the base station is an anchor base station, sending a third request message by the base station to a current serving base station, where the third request message is configured to request the current serving base station to activate the UL positioning reference signal;
receiving a first response message fed back by the current serving base station according to the third request message; where the third request message includes one or more of the following:
   an index of a UL positioning reference signal that is requested to be activated;
   an indication of requesting activation of a UL positioning reference signal; or
   configuration information of a pre-configured UL positioning reference signal.

The first response message includes one or more of the following:
an indication of confirming activation of a UL positioning reference signal; or
an index of an activated UL positioning reference signal.

Optionally, the transceiver 700 is further configured for:
receiving an activation request message sent by the LMF, where the activation request message is configured to request a base station to activate a UL positioning reference signal, and/or perform anchor switching;
feeding back an activation acknowledge message to the LMF according to the activation request message sent by the LMF, while or after sending the activation command to the terminal;
where the activation acknowledge message includes one or more of the following:
   an indication of confirming activation of a UL positioning reference signal; or
   an index of an activated UL positioning reference signal.

Optionally, the activation request message carries one or more of the following:
an indication of confirming activation of a UL positioning reference signal;
an index of an activated UL positioning reference signal;
an indication that a base station performs anchor switching; or
information related to a current serving base station.

Optionally, in a case that the base station is the anchor base station and the activation request message sent by the LMF is configured to indicate the base station to perform the anchor switching, the processor 710 is configured to perform following when executing the program:
switching, by the base station, the anchor base station of the terminal to the current serving base station.

Optionally, the processor 700 is further configured for: while or after sending the activation command to the terminal,
sending a first indication message to the LMF, where the first indication message is configured to inform the LMF of the activated UL positioning reference signal; where the first indication message includes one or more of the following:
an indication of confirming activation of the UL positioning reference signal;
an index of the activated UL positioning reference signal;
an indication that the base station performs the anchor switching; or
information related to the current serving base station.

Optionally, the transceiver 700 is further configured for: before receiving the first request message sent by the terminal in the IDLE state or the INACTIVE state,
sending an RRC message to the terminal, where the RRC message carries one or more of the following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

It should be noted that, the network-side device provided in the application can implement all method steps implemented in the embodiment of the method of activating the UL positioning reference signal performed by the network-side device, and can achieve the same technical effect, and the same parts between the method embodiments and the network side device in the application and beneficial effects are not described in detail herein.

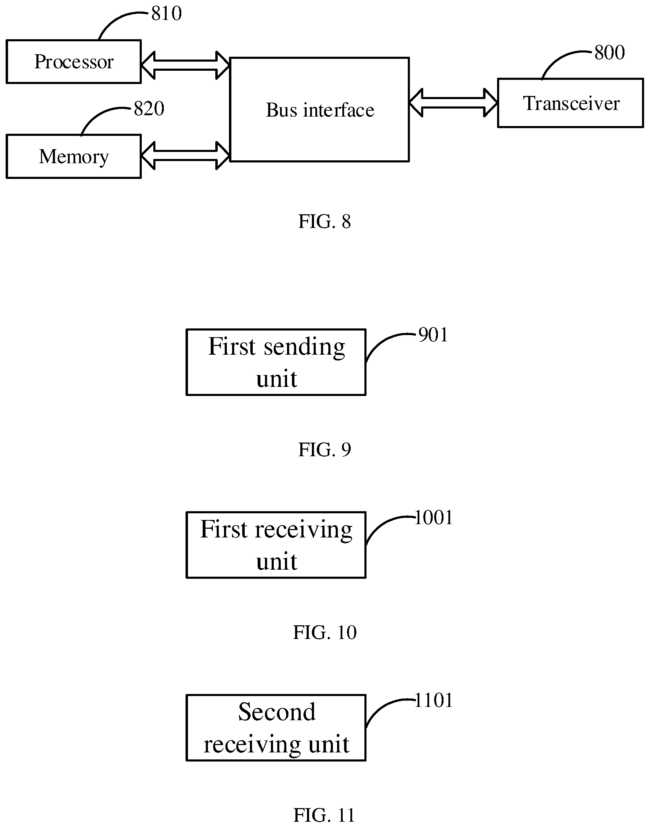

As shown in FIG. 8, the application further provides a network-side device. The network-side device includes: a transceiver 800, a memory 820, a processor 810, and a computer program stored on the memory 820 and executable on the processor 810; the transceiver 800 is configured for receiving a first request message sent by a terminal in a RRC_idle state or a RRC_inactive state, where the first request message is configured to request to activate a UL positioning reference signal. It should be noted that the network-side device herein may be a location management function (LMF) entity.

In FIG. 8, a bus architecture may include any number of interconnected buses and bridges. Specifically, various circuits such as one or more processors represented by the processor 810 and a memory represented by the memory 820 are linked together. The bus architecture may also link together various other circuits, such as peripheral devices, voltage regulators, and power management circuits, etc. which are well known in the art, and therefore are not further described herein. The bus interface provides an interface. The transceiver 800 may be a plurality of elements, i.e. include a transmitter and a receiver, and provide units for communicating with various other devices on a transmission medium. The transmission medium includes a wireless channel, a wired channel, and an optical cable. The processor 810 is responsible for managing the bus architecture and general processing, and the memory 820 may store data used by the processor 810 when performing operations.

The processor 810 may be a Central Processing Unit (CPU), an Application Specific Integrated Circuit (ASIC), a Field-Programmable Gate Array (FPGA), or A Complex Programmable Logic Device (CPLD), and the processor may also adopt a multi-core architecture.

Optionally, the first request message is an LPP activation request message, and the LPP activation request message carries one or more of the following:
indication information of requesting to activate the UL positioning reference signal;
an index of the UL positioning reference signal that is requested to be activated;
information of a current serving cell; or
beam information.

Optionally, the transceiver 800 is further configured for: after receiving the first request message sent by the terminal in the IDLE state or the INACTIVE state,
sending an LPP activation command to the terminal; where the LPP activation command carries one or more of the following:
an indication of confirming activation of the UL positioning reference signal; or
an index of the activated UL positioning reference signal.

Optionally, the transceiver 800 is further configured for:
receiving a second request message sent by a base station, where the second request message is configured to request the LMF to activate a UL positioning reference signal;
receiving a first indication message sent by a base station, where the first indication message is configured to inform the LMF of the activated UL positioning reference signal.

Optionally, the transceiver 800 is further configured for:
sending an activation request message to a base station, where the activation request message is configured to request a base station to activate a UL positioning reference signal, and/or perform anchor switching; and/or,
after sending the activation request message to the base station, receiving an activation acknowledge message sent by the base station, where the activation acknowledge message is feedback of the activation request message;
where the activation request message carries one or more of the following:
   an indication of confirming activation of the UL positioning reference signal;
   an index of the activated UL positioning reference signal;
   an indication that the base station performs anchor switching; or
   information related to the current serving base station.

Optionally, the second request message includes one or more of the following:
indication information for requesting to activate a UL positioning reference signal; or
an index of a UL positioning reference signal requested to be activated.

Optionally, the first indication message and the activation acknowledge message include one or more of the following:
an indication of confirming activation of the UL positioning reference signal; or
an index of the activated UL positioning reference signal.

Optionally, the transceiver 800 is further configured for: before receiving the first request message sent by the terminal in the IDLE state or the INACTIVE state,
sending a UL positioning trigger condition to the terminal, where the UL positioning trigger condition includes one or more of the following:
a time instant of triggering positioning;
a period of triggering positioning;
the number of times of performing positioning; or
an event that triggers positioning.

It should be noted that, the network-side device provided in the application can implement all method steps implemented by the embodiment of the method of activating the UL positioning reference signal performed by the location management function (LMF) entity, and can achieve the same technical effect, and the same parts between the method embodiments in the application and the network-side device and the beneficial effects are not described in detail herein.

As shown in FIG. 9, the application further provides a device of activating a UL positioning reference signal, the device is applied to a terminal. The device includes: a first sending unit 901 configured for sending a first request message to a network side when the terminal is in a RRC_idle state or a RRC_inactive state, where the first request message is configured to request to activate the UL positioning reference signal.

Optionally, the activation device of the application further includes: a second sending unit, configured to send the first request message to a location management function (LMF) entity, where the first request message is an LPP activation request message; and/or a third sending unit, configured to send the first request message to a base station, where the first request message is a preamble that is dedicated to activating the UL positioning reference signal, and/or an activation request signal.

Optionally, before the sending the first request message to the network side, the first sending unit is further configured for: detecting that a UL positioning trigger condition is satisfied.

Optionally, the first request message carries one or more of the following:
indication information of requesting to activate the UL positioning reference signal;
an index of the UL positioning reference signal that is requested to be activated;
information of a current serving cell; or
beam information.

Optionally, the activation device further includes: a third receiving unit, configured for receiving an activation command sent by a network side; transmitting the UL positioning reference signal.

Optionally, receiving the activation command sent by the network side includes:
receiving the activation command sent by a base station; and/or
receiving an LPP activation command sent by the LMF.

Optionally, the activation command sent by the base station may be one or more of the following:
a radio resource control (RRC) message;
a random access response (RAR);
downlink control information (DCI); or
Media Access Control (MAC)-Control Element (CE).

Optionally, the activation command carries one or more of the following:
an indication of confirming activation of the UL positioning reference signal; or
an index of the activated UL positioning reference signal.

Optionally, the activating device further includes: a fourth receiving unit, configured for: receiving the UL positioning trigger condition sent by an LMF; where, the UL positioning trigger condition includes one or more of the following:
a time instant of triggering the positioning;
a period of triggering the positioning;
the number of times of performing the positioning; or
an event triggering the positioning.

Optionally, the activation device further includes: a fourth receiving unit, configured for: receiving an RRC message sent by a base station, where the RRC message carries one or more of the following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

As shown in FIG. 10, the application further provides a device of activating a UL positioning reference signal. The device is applied to a base station, and includes: a first receiving unit 1001 configured for receiving a first request message sent by a terminal in an IDLE state or an INACTIVE state, where the first request message is configured to request to activate the UL positioning reference signal.

Optionally, the activation device further includes a fifth sending unit, configured for sending an activation command to the terminal.

Optionally, the first request message is a preamble that is dedicated to activating the UL positioning reference signal, and/or an activation request signal.

Optionally, the activation command is one or more of the following:
a Radio Resource Control (RRC) message;
a Random Access Response (RAR) response;
Downlink Control Information (DCI);
Media Access Control (MAC) Control Element (CE) ;
indication of confirming activation of the UL positioning reference signal; or
an index of the activated UL positioning reference signal.

Optionally, the first request message carries one or more of the following:
indication information of requesting to activate the UL positioning reference signal; or
an index of the UL positioning reference signal that is requested to be activated.

Optionally, the activation device further includes: a sixth sending unit, configured for sending a second request message to the LMF, where the second request message is configured to request the LMF to activate the UL positioning reference signal; where the second request message includes one or more of the following:
an index of a UL positioning reference signal that is requested to be activated;
an indication of requesting activation of a UL positioning reference signal; or
configuration information of a pre-configured UL positioning reference signal.

Optionally, the activation device further includes:
a seventh sending unit, configured for, in a case that the base station is an anchor base station, sending a third request message by the base station to a current serving base station, where the third request message is configured to request the current serving base station to activate the UL positioning reference signal;
a fifth receiving unit, configured for receiving a first response message fed back by the current serving base station according to the third request message; where the third request message includes one or more of the following:
   an index of a UL positioning reference signal that is requested to be activated;
   an indication of requesting activation of a UL positioning reference signal; or
   configuration information of a pre-configured UL positioning reference signal.

The first response message includes one or more of the following:
an indication of confirming activation of a UL positioning reference signal; or
an index of an activated UL positioning reference signal.

Optionally, before sending the activation command to the terminal, the activation device is further configured for:
receiving an activation request message sent by the LMF, where the activation request message is configured to request a base station to activate a UL positioning reference signal, and/or perform anchor switching;
feeding back an activation acknowledge message to the LMF according to the activation request message sent by the LMF, while or after sending the activation command to the terminal;
where the activation acknowledge message includes one or more of the following:
   an indication of confirming activation of a UL positioning reference signal;
   an index of an activated UL positioning reference signal;
   an indication that a base station performs anchor switching; or
   information related to a current serving base station.

Optionally, the activation request message carries one or more of the following:
an indication of confirming activation of a UL positioning reference signal;
an index of an activated UL positioning reference signal;
an indication that a base station performs anchor switching; or
information related to a current serving base station.

Optionally, in a case that the base station is the anchor base station and the activation request message sent by the LMF is configured to indicate the base station to perform the anchor switching, the activation device is further configured for:
switching, by the base station, the anchor base station of the terminal to the current serving base station.

Optionally, the activation device further includes: an eighth sending unit, configured for:
sending a first indication message to the LMF, where the first indication message is configured to inform the LMF of the activated UL positioning reference signal; where the first indication message includes one or more of the following:
an indication of confirming activation of the UL positioning reference signal; or
an index of the activated UL positioning reference signal.

Optionally, the activation device further includes: a ninth sending unit, configured for sending an RRC message to the terminal, where the RRC message carries one or more of the following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

As shown in FIG. 11, the application further provides a device of activating a UL positioning reference signal. The device is applied to an LMF, and includes: a second receiving unit 1101, configured for receiving a first request message sent by a terminal in a RRC_idle state or a RRC_inactive state, where the first request message is configured to request to activate a UL positioning reference signal.

Optionally, the first request message is an LPP activation request message, and the LPP activation request message carries one or more of the following:
indication information of requesting to activate the UL positioning reference signal;
an index of the UL positioning reference signal that is requested to be activated;
information of a current serving cell; or
beam information.

Optionally, the activation device further includes: a tenth sending unit, configured to send an LPP activation command to the terminal; where the LPP activation command carries one or more of the following:
an indication of confirming activation of the UL positioning reference signal; or
an index of the activated UL positioning reference signal.

Optionally, the activation device is further configured for:
receiving a second request message sent by a base station, where the second request message is configured to request the LMF to activate a UL positioning reference signal;
receiving a first indication message sent by a base station, where the first indication message is configured to inform the LMF of the activated UL positioning reference signal.

Optionally, the activation device further includes: an eleventh sending unit, configured for sending an activation request message to a base station, where the activation request message is configured to request a base station to activate a UL positioning reference signal, and/or perform anchor switching; and/or, after sending the activation request message to the base station, receiving an activation acknowledge message sent by the base station, where the activation acknowledge message is feedback of the activation request message;
where the activation request message carries one or more of the following:
an indication of confirming activation of the UL positioning reference signal;
an index of the activated UL positioning reference signal;
an indication that the base station performs anchor switching; or
information related to the current serving base station.

Optionally, the second request message includes one or more of the following:
indication information for requesting to activate a UL positioning reference signal; or
an index of a UL positioning reference signal requested to be activated.

Optionally, the first indication message and the activation acknowledge message include one or more of the following:
an indication of confirming activation of the UL positioning reference signal; or
an index of the activated UL positioning reference signal.

Optionally, the activation device further includes: a twelfth sending unit, configured for sending a UL positioning trigger condition to the terminal, where the UL positioning trigger condition includes one or more of the following:
a time instant of triggering positioning;
a period of triggering positioning;
the number of times of performing positioning; or
an event that triggers positioning.

The application further provides a processor-readable storage medium, where the computer-readable storage medium stores a program instruction, and the program instruction is used to cause the processor to perform the steps of the method of activating the UL positioning reference signal as described above. Moreover, the same technical effect can be achieved. To avoid repetition, details are not described herein again.

The processor-readable storage medium may be any usable medium or data storage device that can be accessed by a processor, and includes, but is not limited to, a magnetic memory (such as a floppy disk, a hard disk, a magnetic tape, a magneto-optical disk (Mo), etc.), an optical memory (for example, a Compact Disk, CD), a Digital Video Disc (DVD), a Blu-Ray Disc (BD), a High-Definition General Optical Disc (DVD), a Blu-Ray Disc (HVD), etc.), and a semiconductor memory (such as a Read-Only Memory, ROM), an erasable programmable read-only memory (EPROM), an electrically erasable programmable read-only memory (EEPROM), a non-volatile memory (NAND FLASH), a solid state disk (SSD)), etc.

Those skilled in the art should understand that the embodiments of the application may be provided as a method, a system, or a computer program product. Thus, the application may take the form of an entire hardware embodiment, an entire software embodiment, or embodiments incorporating software and hardware aspects. Moreover, the application may take the form of a computer program product implemented on one or more computer-usable storage media (including but not limited to a disk memory and an optical memory, etc.) including computer-usable program codes.

The application is described with reference to flowcharts and/or block diagrams of methods, devices (systems), and computer program products according to embodiments of the application. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general purpose computer, a special purpose computer, an embedded processor, or other programmable data processing device to generate a machine, such that instructions executed by a processor of the computer or other programmable data processing device generate means for implementing functions specified in one or more flows of the flowcharts and/or one or more blocks of the block diagrams.

These processor-executable instructions may also be stored in a processor-readable memory that can direct a computer or other programmable data processing device to operate in a particular manner such that the instructions stored in the processor-readable memory produce a product that includes an instruction device that implements the functions specified in one or more flows of the flowcharts and/or one or more blocks of the block diagrams.

These processor-executable instructions may also be loaded onto a computer or other programmable data processing device such that a series of operational steps are performed on a computer or other programmable device to produce a computer-implemented process, such that the instructions executed on the computer or other programmable device provide steps for implementing the functions specified in one or more flows of the flowchart and/or one or more blocks of the block diagram.

It should be noted that, the division of the above modules is merely a division of a logical function, and all or some of the modules may be integrated onto one physical entity during actual implementation, or may be physically separated. In addition, these modules may all be implemented in the form of software invoked by a processing element, or may all be implemented in the form of hardware; or some modules may be implemented in the form of a processing element invoking software, and some of the modules are implemented in the form of hardware. For example, the determining module may be a separately configured processing element, or may be integrated in a certain chip of the foregoing device, and in addition, the determining module may also be stored in a memory of the device in the form of program codes, and a certain processing element of the device invokes and executes the functions of the determining module. Implementations of other modules are similar. In addition, all or part of these modules may be integrated together, or may be implemented independently. The processing element described herein may be an integrated circuit having a signal processing capability. In an implementation process, each step of the above-mentioned method or each of the above modules may be completed by means of an integrated logic circuit of hardware in the processor element or an instruction in a software form.

For example, each module, unit, subunit, or sub-module may be one or more integrated circuits configured to implement the above method, for example, one or more application specific integrated circuits (ASICs), or one or more microprocessors (digital signal processors, DSPs), or one or more field programmable gate arrays (FPGAs), etc. For another example, when a certain module is implemented in the form of a processing element scheduling program codes, the processing element may be a general-purpose processor, for example, a central processing unit (CPU) or another processor that may invoke a program code. For another example, these modules may be integrated together and implemented in the form of a system-on-a-chip (SOC).

The terms "first", "second", and the like in the specification and claims of the application are used to distinguish similar objects, and do not need to be used to describe a specific order or sequence. It should be understood that terms used in this way may be interchanged under appropriate circumstances so that the embodiments of the disclosure described herein, for example, are implemented in an order other than those illustrated or described herein. Furthermore, the terms" include "and" have " and any variations thereof are intended to cover non-exclusive inclusion, for example, processes, methods, systems, products, or devices that include a series of steps or units are not necessarily limited to those steps or units clearly listed, but may include other steps or units not expressly listed or inherent to these processes, methods, products, or devices. In addition, the description and the claims use "and/or" indicate at least one of the connected objects, such as A and/or B and/or C, indicating that there are seven cases that A exists alone, B exists alone, C exists alone, both A and B exist, both B and C exist, both A and C exist, and all A, B and C exist. Similarly, the use of "at least one of A and B" in this specification and in the claims should be understood as "a single A, a separate B, or both A and B".

Obviously, those skilled in the art may make various modifications and variations to the application without departing from the spirit and scope of the application. Thus, if these modifications and variations of the application fall within the scope of the claims and their equivalents, the application is also intended to encompass these modifications and variations.

## Claims

1. An activation method of an Uplink (UL) positioning reference signal, performed by a terminal, comprising:
sending a first request message to a network side when the terminal is in a RRC_idle state or a RRC_inactive state, wherein the first request message is configured to request to activate the UL positioning reference signal.

2. The activation method according to claim 1, wherein sending the first request message to the network side comprises:
sending the first request message to a location management function (LMF) entity, wherein the first request message is a Location and Positioning Protocol (LPP) activation request message; and/or
sending the first request message to a base station, wherein the first request message is a preamble that is dedicated to activating the UL positioning reference signal, and/or an activation request signal.

3. The activation method according to claim 1, wherein before sending the first request message to the network side, the method further comprises:
detecting, by the terminal, that a UL positioning trigger condition is satisfied.

4. The activation method according to claim 1 or 2, wherein the first request message carries one or more of following:
indication information of requesting to activate a UL positioning reference signal;
an index of a UL positioning reference signal requested to be activated;
information of a current serving cell; or
beam information.

5. The activation method according to claim 1, wherein after sending the first request message to the network side, the method further comprises:
receiving an activation command sent by the network side;
transmitting the UL positioning reference signal.

6. The activation method according to claim 5, wherein receiving the activation command sent by the network side comprises:
receiving the activation command sent by a base station; and/or
receiving an LPP activation command sent by the LMF.

7. The activation method according to claim 6, wherein the activation command sent by the base station comprises at least one or more of following:
a Radio Resource Control (RRC) message;
a Random Access Response (RAR);
Downlink Control Information (DCI); or
Media Access Control (MAC)-Control Element (CE).

8. The activation method according to claim 5, wherein the activation command carries one or more of following:
an indication of confirming activation of the UL positioning reference signal; or
an index of the activated UL positioning reference signal.

9. The activation method according to claim 1, wherein before sending the first request message to the network side, the method further comprises:
receiving an UL positioning trigger condition sent by an LMF; wherein, the UL positioning trigger condition comprises one or more of following:
a time instant at which positioning is triggered;
a period that positioning is triggered;
a quantity of times for which positioning is triggered; or
an event that triggers positioning.

10. The activation method according to claim 1, wherein before sending the first request message to the network side, the method further comprises:
receiving a Radio Resource Control (RRC) message sent by a base station, wherein the RRC message carries one or more of following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

11. An activation method of an Uplink (UL) positioning reference signal, performed by a base station, comprising:
receiving a first request message sent by a terminal in a RRC_idle state or a RRC_inactive state, wherein the first request message is configured to request to activate the UL positioning reference signal.

12. The activation method according to claim 11, further comprising:
sending an activation command to the terminal.

13. The activation method according to claim 11, wherein the first request message is a preamble that is dedicated to activating the UL positioning reference signal, and/or an activation request signal.

14. The activation method according to claim 12, wherein before sending the activation command to the terminal, the method further comprises:
sending a second request message to a location management function (LMF), wherein the second request message is configured to request the LMF to activate the UL positioning reference signal;
wherein the second request message comprises one or more of following:
an index of a UL positioning reference signal that is requested to be activated;
an indication of requesting activation of a UL positioning reference signal; or
configuration information of a pre-configured UL positioning reference signal.

15. The activation method according to claim 11, wherein when the terminal is in the RRC_inactive state, after receiving the first request message sent by the terminal in the RRC_inactive state, the method further comprises:
in a case that the base station is an anchor base station, sending a third request message by the base station to a current serving base station, wherein the third request message is configured to request the current serving base station to activate the UL positioning reference signal;
receiving a first response message fed back by the current serving base station according to the third request message; wherein the third request message comprises one or more of following:
an index of a UL positioning reference signal that is requested to be activated;
an indication of requesting activation of a UL positioning reference signal; or
configuration information of a pre-configured UL positioning reference signal,
wherein the first response message comprises one or more of following:
an indication of confirming activation of a UL positioning reference signal; or
an index of an activated UL positioning reference signal.

16. The activation method according to claim 12, wherein before sending the activation command to the terminal, the method further comprises:
receiving an activation request message sent by the LMF, wherein the activation request message is configured to request a base station to activate the UL positioning reference signal, and/or perform anchor switching;
feeding back an activation acknowledge message to the LMF according to the activation request message sent by the LMF, while or after sending the activation command to the terminal;
wherein the activation acknowledge message comprises one or more of following:
an indication of confirming activation of the UL positioning reference signal;
an index of the activated UL positioning reference signal;
an indication that a base station performs anchor switching; or
information related to a current serving base station.

17. The activation method according to claim 16, wherein in a case that the base station is the anchor base station and the activation request message sent by the LMF is configured to indicate the base station to perform the anchor switching, the method further comprises:
switching, by the base station, the anchor base station of the terminal to the current serving base station.

18. The activation method according to claim 12, further comprising:
sending a first indication message to the LMF while or after sending the activation command to the terminal, wherein the first indication message is configured to inform the LMF of the activated UL positioning reference signal; wherein the first indication message comprises one or more of following:
an indication of confirming activation of the UL positioning reference signal; or
an index of the activated UL positioning reference signal.

19. The activation method according to claim 11, wherein before receiving the first request message sent by the terminal in the RRC_idle state or the RRC_inactive state, the method further comprises:
sending a Radio Resource Control (RRC) message to the terminal, wherein the RRC message carries one or more of following:
configuration information of the UL positioning reference signal that is pre-configured for the terminal;
configuration information of an activation request signal that is pre-configured for the terminal and used for activating the UL positioning reference signal; or
a pre-configured preamble that is dedicated to activating the UL positioning reference signal.

20. An activation method of an Uplink (UL) positioning reference signal, performed by a location management function (LMF) entity, comprising:
receiving a first request message sent by a terminal in a RRC_idle state or a RRC_inactive state, wherein the first request message is configured to request to activate the UL positioning reference signal.

21. The activation method according to claim 20, wherein the first request message is a Location and Positioning Protocol (LPP) activation request message, and the LPP activation request message carries one or more of following:
indication information of requesting to activate the UL positioning reference signal;
an index of the UL positioning reference signal that is requested to be activated;
information of a current serving cell; or
beam information.

22. The activation method according to claim 20, wherein after receiving the first request message sent by the terminal in the RRC_idle state or the RRC_inactive state, the method further comprises:
sending an LPP activation command to the terminal; wherein the LPP activation command carries one or more of following:
an indication of confirming activation of the UL positioning reference signal; or
an index of the activated UL positioning reference signal.

23. The activation method according to claim 20, further comprising:
receiving a second request message sent by a base station, wherein the second request message is configured to request the LMF to activate the UL positioning reference signal;
receiving a first indication message sent by the base station, wherein the first indication message is configured to inform the LMF of the activated UL positioning reference signal.

24. The activation method according to claim 20 or 23, further comprising:
sending an activation request message to a base station, wherein the activation request message is configured to request a base station to activate the UL positioning reference signal, and/or perform anchor switching; and/or,
after sending the activation request message to the base station, receiving an activation acknowledge message sent by the base station, wherein the activation acknowledge message is feedback of the activation request message;
wherein the activation request message carries one or more of following:
an indication of confirming activation of the UL positioning reference signal;
an index of the activated UL positioning reference signal;
an indication that the base station performs anchor switching; or
information related to the current serving base station.

25. The activation method according to claim 20, wherein before receiving the first request message sent by the terminal in the RRC_idle state or the RRC_inactive state, the method further comprises:
sending a UL positioning trigger condition to the terminal, wherein the UL positioning trigger condition comprises one or more of following:
a time instant at which positioning is triggered;
a period that positioning is triggered;
a quantity of times for which positioning is performed; or
an event that triggers positioning.

26. A terminal device, comprising:
a transceiver, a memory, a processor, and a computer program stored on the memory and executable by the processor; wherein the transceiver is configured for:
sending a first request message to a network side when the terminal is in a RRC_idle state or a RRC_inactive state, wherein the first request message is configured to request to activate the UL positioning reference signal.

27. The terminal device according to claim 26, wherein the transceiver is further configured for:
sending the first request message to a location management function (LMF) entity, wherein the first request message is a Location and Positioning Protocol (LPP) activation request message; and/or
sending the first request message to a base station, wherein the first request message is a preamble that is dedicated to activating the UL positioning reference signal, and/or an activation request signal.

28. The terminal device according to claim 26, wherein before sending the first request message to the network side, the processor is further configured for:
detecting, by the terminal, that a UL positioning trigger condition is satisfied.

29. The terminal device according to claim 26 or 27, wherein the first request message carries one or more of following:
indication information of requesting to activate the UL positioning reference signal;
an index of the UL positioning reference signal requested to be activated;
information of a current serving cell; or
beam information.

30. The terminal device according to claim 26, wherein after sending the first request message to the network side, the transceiver is further configured for receiving an activation command sent by the network side,
the processor is further configured for transmitting the UL positioning reference signal.

31. The terminal device according to claim 30, wherein the transceiver is further configured for:
receiving the activation command sent by a base station; and/or
receiving an LPP activation command sent by the LMF.

32. The terminal device according to claim 31, wherein the activation command sent by the base station comprises at least one or more of following:
a Radio Resource Control (RRC) message;
a Random Access Response (RAR);
Downlink Control Information (DCI); or
Media Access Control (MAC)-Control Element (CE).

33. The terminal device according to claim 30, wherein the activation command carries one or more of following:
an indication of confirming activation of the UL positioning reference signal; or
an index of the activated UL positioning reference signal.

34. The terminal device according to claim 26, wherein before sending the first request message to the network side, the transceiver is further configured for:
receiving an UL positioning trigger condition sent by an LMF; wherein, the UL positioning trigger condition comprises one or more of following:
a time instant at which positioning is triggered;
a period that positioning is triggered;
a quantity of times for which positioning is triggered; or
an event that triggers positioning.

35. The terminal device according to claim 26, wherein before sending the first request message to the network side, the transceiver is further configured for:
receiving a Radio Resource Control (RRC) message sent by a base station, wherein the RRC message carries one or more of following:
configuration information of the UL positioning reference signal that is pre-configured for the terminal;
configuration information of an activation request signal that is pre-configured for the terminal and used for activating the UL positioning reference signal; or
a pre-configured preamble that is dedicated to activating the UL positioning reference signal.

36. A network-side device, comprising:
a transceiver, a memory, a processor, and a computer program stored on the memory and executable on the processor; wherein the transceiver is configured for:
receiving a first request message sent by a terminal in a RRC_idle state or a RRC_inactive state, wherein the first request message is configured to request to activate the UL positioning reference signal.

37. A network-side device, comprising:
a transceiver, a memory, a processor, and a computer program stored on the memory and executable on the processor; wherein the transceiver is configured for:
receiving a first request message sent by a terminal in a RRC_idle state or a RRC_inactive state, wherein the first request message is configured to request to activate the UL positioning reference signal.

38. An activation device of an Uplink (UL) positioning reference signal, applied to a terminal and comprising:
a first sending unit, configured for sending a first request message to a network side when the terminal is in a RRC_idle state or a RRC_inactive state, wherein the first request message is configured to request to activate the UL positioning reference signal.

39. The activation device according to claim 38, further comprising:
a second sending unit, configured for sending the first request message to a location management function (LMF) entity, wherein the first request message is a Location and Positioning Protocol (LPP) activation request message; and/or
a third sending unit, configured for sending the first request message to a base station, wherein the first request message is a preamble that is dedicated to activating the UL positioning reference signal, and/or an activation request signal.

40. The activation device according to claim 38, wherein before sending the first request message to the network side, the first sending unit is further configured for:
detecting, by the terminal, that a UL positioning trigger condition is satisfied.

41. The activation device according to claim 38 or 39, wherein the first request message carries one or more of following:
indication information of requesting to activate a UL positioning reference signal;
an index of a UL positioning reference signal requested to be activated;
information of a current serving cell; or
beam information.

42. The activation device according to claim 38, wherein the activation device further comprises:
a third receiving unit, configured for receiving an activation command sent by the network side; transmitting the UL positioning reference signal.

43. The activation device according to claim 42, wherein receiving the activation command sent by the network side comprises:
receiving the activation command sent by a base station; and/or
receiving an LPP activation command sent by the LMF..

44. The activation device according to claim 43, wherein the activation command sent by the base station comprises at least one or more of following:
a Radio Resource Control (RRC) message;
a Random Access Response (RAR);
Downlink Control Information (DCI); or
Media Access Control (MAC)-Control Element (CE).

45. The activation device of claim 42, wherein the activation command carries one or more of following:
an indication of confirming activation of the UL positioning reference signal; or
an index of the activated UL positioning reference signal.

46. The activation device according to claim 38, wherein the activation device further comprises:
a fourth receiving unit, configured for receiving an UL positioning trigger condition sent by an LMF; wherein, the UL positioning trigger condition comprises one or more of following:
a time instant at which positioning is triggered;
a period that positioning is triggered;
a quantity of times for which positioning is triggered; or
an event that triggers positioning.

47. The activation device according to claim 38, wherein the activation device further comprises:
a fourth receiving unit, configured for receiving a Radio Resource Control (RRC) message sent by a base station, wherein the RRC message carries one or more of following:
configuration information of the UL positioning reference signal that is pre-configured for the terminal;
configuration information of the activation request signal that is pre-configured for the terminal and used for activating the UL positioning reference signal; or
a pre-configured preamble that is dedicated to activating the UL positioning reference signal.

48. An activation device of an Uplink (UL) positioning reference signal, applied to a base station, comprising:
a first receiving unit, configured for receiving a first request message sent by a terminal in a RRC_idle state or a RRC_inactive state, wherein the first request message is configured to request to activate the UL positioning reference signal.

49. An activation device of an Uplink (UL) positioning reference signal, applied to a Location Management Function (LMF) entity, comprising:
a second receiving unit, configured for receiving a first request message sent by a terminal in a RRC_idle state or a RRC_inactive state, wherein the first request message is configured to request to activate the UL positioning reference signal.

50. A processor-readable storage medium, wherein the computer-readable storage medium stores a program instruction, the program instruction is configured to cause a processor to execute steps of the activation method of the UL positioning reference signal according to any one of claims 1-25.
